# EUROPEAN PATENT SPECIFICATION

(11) **EP 1 190 203 B1**
(45) Date of publication and mention of the grant of the patent: **19.03.2003**
(21) Application number: 00920949.5
(22) Date of filing: 17.04.2000
(51) Int. Cl.: F27D 23/04, F27D 1/16, C22B 9/05, C21C 5/44, C21C 5/46, C21C 1/06

(54) **PROTECTION COATING OF WEAR-EXPOSED COMPONENTS USED FOR REFINING MOLTEN METAL**
SCHUTZBESCHICHTUNG FÜR KOMPONENTEN, DIE DURCH EROSION WÄHREND DES FRISCHENS VON GESCHMOLZENEN METALLEN ANGEGRIFFEN WERDEN
REVETEMENT DE PROTECTION DE COMPOSANTS EXPOSES A L'USURE UTILISES DANS LE RAFFINAGE DU METAL FONDU

(30) Priority: 16.04.1999 WO PCT/IB99/00700; 09.12.1999 WO PCT/IB99/01982
(43) Date of publication of application: 27.03.2002
(73) Proprietor: MOLTECH Invent S.A., 2320 Luxembourg (LU)
(72) Inventor: HOLZ, K., Jacqueline, F-74500 Publier (FR); DURUZ, Jean-Jacques, CH-1205 Geneva (CH)
(74) Representative: Cronin, Brian
(86) International application number: IB0000475
(87) International publication number: WO00063630

(56) References cited:
- EP-A- 0 356 943
- WO-A-97/36744
- US-A- 4 769 066
- US-A- 5 420 084
- US-A- 5 486 278
- PATENT ABSTRACTS OF JAPAN vol. 012, no. 316 (C-524), 26 August 1988 (1988-08-26) & JP 63 086827 A (NIPPON LIGHT METAL CO LTD), 18 April 1988 (1988-04-18)

## Description

### Field of the Invention

The invention relates to an apparatus for treating molten metal, in particular for the purification of molten metal, such as molten aluminium, magnesium, steel, cast iron or copper, having a wear-exposed component, such as a stirrer for dispersing a purifying fluid; and a method for treating molten metal with such an apparatus.

### Background of the Invention

For many commercial applications aluminium as well as other metals such as magnesium, steel, cast iron or copper need to be of such high purity that the produced metal needs to undergo a purification process. Such purification process usually takes place immediately after the production of the molten metal or during a recycling process.

The purity of the aluminium produced in commercial Hall-Héroult cells is typically between 99.7 to 99.9%. The impurities present in the produced aluminium are mainly silicon, zinc, magnesium, manganese and titanium, traces of copper chromium, gallium, sodium, lithium, calcium, vanadium and boron, as well as oxides, carbides and hydrogen (D.G.Altenpohl, "Aluminium: Technology, Applications, and Environment", 1998, 6th Edition, The Aluminum Association Inc., Washington D.C., p. 15).

One process for purifying molten metal, in particular molten aluminium includes imparting a rotation to the molten metal around a substantially vertical axis to separate the impurities by centrifugal or gravitational force. US Patents 4,760,066 (Eidem) and 5,106,411 (Miki/Kitaoka/Fujii/Takeuchi/Sorimachi/Sakuraya/Sudo) both disclose such a process in which the rotation is produced by a rotational magnetic field applied to the molten metal. In WO99/60177 (Trojer), on the other hand, the vessel containing the molten metal is rotated, this process being used to purify the molten metal or to separate it from a second molten metal.

Another process for purifying molten metal, in particular aluminium, consists of passing a purifying additive which may be a halide gas such as chlorine or fluorine, or nitrogen or argon. These gases remove hydrogen, sodium, lithium, calcium and magnesium from the molten metal.

US Patent 3,887,172 (Funck/Schummer) discloses an apparatus for the purification of molten steel or cast iron by injecting therein argon and/or nitrogen to reduce the level of silicon and for desulfurisation, dephosphorisation and de-oxidation.

During the purification process, which is often referred to as "metal degassing", purifying gas bubbles are finely and homogeneously dispersed in the molten metal for 200 to 300 seconds or longer. Gas is finely divided into small bubbles in the molten metal with suitable stirrers, such as rotating dispersers as disclosed in US Patent 3,743,263 and 3,870,511 (both in the name of Szekely).

The design of such apparatus, in particular of devices incorporating means to inject and disperse a purifying gas has been the object of numerous developments and patents. Turbines or rotors, such as "high shear rotors", provided with blades or baffles have been disclosed for instance in US Patents 3,839,019 (Bruno/Jarrett/Slaugenhaupt/Graziano), 4,426,068 (Gimond/Gonda/Hicter/Laty) and 5,198,180 (Pelton). Alternatively, rotors, such as "pump action rotors" may be provided with internal cavities communicating with the molten metal bath and with a purifying gas under pressure, the purifying gas being mixed with the molten metal inside the rotor and evacuated therefrom into the molten metal bath, as described for example in US Patents 4,634,105 (Withers/Pattle), 5,527,381 (Waite/Dumont) and 5,660,614 (Waite/Lavoie/Dube/Dumont).

The stirrers or rotating dispersers immersed in the molten metal and rotating therein are usually made of carbon, in particular graphite. During operation, the stirrers or dispersers are eroded by friction with the molten metal in which they are rotating and rapidly oxidise above the meltline of the molten metal at temperatures exceeding 450°C. During continuous operation conventional stirrers or dispersers typically neck down at the region of the meltline. In batch processes the stirrers are in addition exposed to corrosion and/or oxidation when extracted from the molten metal after purification thereof and before immersion into a new molten metal to be purified. Conventional stirrers or dispersers used in batch processes quickly cone down along their length. Therefore, such rotating stirrers or dispersers need to be frequently replaced.

When graphite components exposed to air continuously dip in molten metal they oxidise above the melt line. Oxidation occurs more rapidly at higher temperature, in particular above 450°C. The rate of oxidation is controlled by the temperature, by the availability of oxygen and by the structure of the graphite. The more porous the graphite or the larger the grain size, then the easier it is for air to penetrate into the graphite and the faster the breakdown of the component. The interconnectivity of the porosity is known to be an important parameter controlling the oxidation resistance of a graphite component.

Unfortunately, graphite components having low porosity and/or a low interconnectivity are relatively expensive because of the raw material and manufacturing costs associated with this type of product.

One method of protecting stirrer or disperser parts consists of covering them with a refractory sleeve, e.g. made of alumina, resistant to oxidation and wear. However, such sleeves are rigid and can only protect a limited number of shapes corresponding to the internal shapes of the sleeves.

It has also been suggested to protect the stirrers or dispersers with boron nitride coatings bonded to the stirrer with an acrylic binder (PYROTEK™ slurries). In practice, such coatings offer only limited protection and permit diffusion of oxygen between the coating and the substrate which leads to oxidation of the stirrers or dispersers from behind the coating. Furthermore, the lifetime of such coatings is limited as they rapidly wear away during use. Moreover, such boron nitride coatings have a rough surface on which particles or amalgams of impurities or other unwanted elements can get caught and carried over between batches of treated metal. The cleaning of the coatings can damage or even destroy them.

WO97/36744 (Billings) discloses inter-alia a stirrer with a refractory coating applied from a slurry of metal-oxynitride particles in a cellulosic binder which is heated to about 500°C to remove the binder and then to above 1800°C to sinter the metal-oxynitride particles.

A conventional protection method consists of impregnating the stirrers or dispersers with aluminium orthophosphate under pressure in autoclaves and limiting their exposure to oxygen during operation by flushing an inert gas, e.g. argon, in the process chamber.

Although aluminium orthophosphate impregnation may double the lifetime of the stirrers or dispersers, as demonstrated in the comparative examples below, such lifetime is still very short and the stirrers or dispersers are still quickly consumed.

Furthermore, such an impregnation with aluminium orthophosphate does not efficiently protect stirrers or dispersers against erosion caused by contact with the molten metal which is in relative motion with the stirrers or dispersers.

Therefore, there is still a need to enhance protection of the stirrers, dispersers and other components which come into contact with the molten metal against erosion, oxidation and corrosion, and reduce the costs caused by the consumption of stirrers or dispersers during operation by increasing their lifetime.

### Objects of the Invention

A general object of the invention is to provide coatings on components, in particular carbon or carbon-based components, used in metallurgical processes, which components during operation are in moving contact with molten metal, the coatings being such as to protect the components against erosion, oxidation and corrosion.

An object of the invention is to provide an apparatus for purifying molten metal, in particular molten aluminium, magnesium, steel, cast iron or copper, provided with a component, such as a carbon-based stirrer, having an improved resistance to erosion, oxidation and corrosion.

Another object of the invention is to provide a carbon-based stirrer having an improved resistance to erosion which can be fitted in existing molten metal purifying apparatus.

A further object of the invention is to provide a carbon-based stirrer of a molten metal purifying apparatus protected against oxidation and corrosion when it is extracted from the molten metal in a batch process.

Another object of the invention is to provide a carbon-based stirrer for a molten metal purifying apparatus provided with a low cost and easily applied protection.

Yet another object of the invention is to provide a method for purifying molten metal in a molten metal purifying apparatus operating with a protected component, such as a carbon-based stirrer.

### Summary of the Invention

The invention relates to an apparatus for treating molten metal comprising a protected component exposable to molten metal to be treated and means for imparting a rotary motion to the molten metal about a substantially vertical axis, as well as a method of protecting such a component. The apparatus is so arranged that during use at least part of a wear-exposed surface of the component is temporarily or permanently in contact with molten metal, the contacting molten metal being in motion relative to the wear-exposed surface. The wear-exposed surface is coated with a slurry of particulate refractory material, in particular refractory material selected from borides of titanium, zirconium, vanadium, tantalum, nickel, molybdenum, chromium and iron, and carbides or oxides of aluminium, silicon, titanium, zirconium, vanadium, tantalum, nickel, molybdenum, chromium, copper and iron, or a combination thereof, in a heat stable inorganic binder which comprises at least one colloid and/or inorganic polymer selected from colloidal alumina, silica, yttria, ceria, thoria, zirconia, magnesia, lithia, monoaluminium phosphate and cerium acetate, and polymeric silica, alumina, yttria and ceria followed by heat treatment. Upon heat treatment the particulate refractory material is consolidated in the dried colloid and/or inorganic polymer containing binder to form a sintered coating that protects the wear-exposed surface against erosion, oxidation and corrosion.

In this context, heat stable means that the binder does not lose its integrity at the operating temperature at which the molten metal is treated, i.e. at or above the melting point of the metal.

Such a coating protecting these components provides the following advantages.
1) The coating can be applied to a component of any shape, even complex shapes, without corrupting the original design.
2) The coating can be applied to selected parts of the component, the thickness of the coating being adaptable to the wear exposure of the selected part. A typical coating thickness is in the range of 100 to 1500 micron, in particular 250 to 800 micron.
3) The coating can be applied by simple techniques, e.g. painting, brushing, spraying and dipping, and does not require complex application devices such as autoclaves.
4) By having a heat stable binder, the overall wear resistance and oxygen impermeability of the coating is not affected at elevated temperatures, even above 450°C or higher, e.g. above the melting point of magnesium, aluminium, copper or iron.
5) The coating is sufficiently resistant to and protective against oxidation that no particular inert atmosphere is needed during use, even at high temperature. This feature is particularly advantageous since older systems which are not designed to operate under inert atmosphere may be economically retrofitted.
6) The coating is not merely oxidation or corrosion resistant but also resistant to erosion.
7) The coating substantially increases the possible duration of use of the component as shown in the comparative examples below.
8) The coating fully protects the component which can be re-coated and re-used after the coating is worn or needs otherwise to be replaced.
9) The coating is suitable to protect numerous substrate materials, e.g. carbon-based materials, such as graphite, carbide materials, such as silicon carbide, and metals, such as iron, steel and titanium, the substrates being thereby protected particularly against chemical attack and dissolution.
10) The protective effect of the coating is such that different materials may be used, in particular grades of carbon cheaper than dense graphite.
11) The coating has such a smooth surface that no unwanted elements carried in and/or on the molten metal get caught on the surface and carried between batches of treated metal. Hence, the coating needs less or cleaning during use.

The apparatus according to the invention can be used for separating molten metal from impurities and/or separating constituents of an alloy metal by centrifugal and/or gravitational force.

As mentioned above, the coated part of the coated component may be made of carbon-based or carbide-based material, in particular petroleum coke, metallurgical coke, anthracite, graphite, amorphous carbon or mixtures thereof. Alternatively, the coated part of the coated component can be made of metal-based material.

The apparatus may comprise one or more of such coated components. Suitable components include vessels for containing the rotating molten metal, stators that in use dip in the molten metal and are arranged to deliver treating fluid into the molten metal, rotatable stirrers arranged to dip in and rotate the molten metal during operation, and other dispersers or components thereof and.

In one embodiment, the apparatus comprises a rotatable stirrer that is surrounded in the molten metal by a stator, e.g. a tube-like stator, the stirrer extending through the stator and protruding therefrom into the molten metal. The rotor and the stator define a passage between them for the delivery of the treating fluid.

For some applications, the apparatus comprises means for generating a rotational magnetic field in the molten metal, usually arranged around a vessel containing the molten metal.

Some coated components like stirrers have an upper and a lower part, the lower part being during operation partly exposed to molten metal up to a meltline. In this configuration, the component has an interface portion extending from below to above said meltline which may be coated with the slurry-applied protective coating.

In one application the apparatus is arranged for the purification of molten metal, in particular the removal of impurities from molten metal and/or degassing molten metal. The apparatus comprise a vessel for containing molten metal to be purified or is associated during use with such a vessel. The apparatus has means for injecting a fluid, in particular a gas, a liquid, and/or a flowable solid, such as particulate e.g. powder and granules, for instance a flux, into the molten metal to remove impurities towards the surface thereof, and a rotatable stirrer forming a coated component which during operation dips in the molten metal, whereby upon rotation of the stirrer the molten metal is stirred and fluid injected therein is dispersed. The stirrer has an upper part engaged with a rotary drive means and a carbon-based lower part which during operation is partly immersed in molten metal up to a meltline.

In this apparatus, the carbon-based lower part of the stirrer has an interface portion which extends from below to above the meltline, the interface portion being coated with the slurry-applied protective coating.

The coating offers the advantage of being suitable to protect any stirrer, including prior art stirrers of complex shapes and stirrers disclosed in the background art discussion.

Another advantage is that the protective coating can be applied selectively onto the stirrer and tailored to control the lifetime of the stirrer.

A further advantage is that the coating can protect any kind of stirrer design in any operating conditions, and be adapted to the type and grade of the carbon-based material to which it is applied.

The entire carbon-based lower part of the stirrer or other coated component, or even substantially the entire stirrer or component, may be fully coated with the refractory material to improve its resistance. However, it has been found sufficient to coat the stirrer or component only on the meltline region where protection is most needed. The coating may also be selectively applied to other parts of the stirrer or component, depending on its design and operating conditions.

The upper part of the stirrer or other coated component may be coated with a thin coating of refractory material against oxidation and corrosion, while the lower part of the stirrer or component is preferably coated with a thick coating of refractory material against erosion, oxidation and corrosion.

Although, it is possible to protect efficiently a carbon-based upper part of the stirrer or other coated component with a refractory material as stated above or with different coatings and/or impregnations as will be further described below, it is not essential to the invention that also the emerging upper part be made of carbon-based material. The upper part of the stirrer or component which is engaged with the drive means, and which is not exposed to molten metal may be made of long-lasting materials other than carbon, in particular oxidation and temperature resistant metals, such as suitable kinds of steel, and/or ceramics.

Therefore, the stirrer or other coated component may be a two part assembly having a coated carbon-based lower part assembled to a long-lasting upper part. Hence, when the carbon-based lower part of the stirrer needs to be replaced, in particular when it is eroded, replacement may be limited to the carbon-based lower part by substituting the used lower part with a new one, which enables cost savings.

The protective coating of the stirrer or other coated component may comprise a refractory hard metal selected from borides of titanium, zirconium, vanadium, tantalum, nickel, molybdenum, chromium and iron, in particular titanium diboride. The protective coating can also comprise at least one carbide or oxide of aluminium, silicon, titanium, zirconium, vanadium, tantalum, nickel, molybdenum, chromium, copper and iron, or a combination thereof, in particular corundum or fused alumina.

The protective coating may be applied from a slurry, in particular a colloidal slurry, containing particulate reactant or non-reactant substances, or a mixture of particulate reactant and non-reactant substances, which when the stirrer is heated at a sufficient temperature, usually above 500°C, form the protective coating by reaction sintering and/or sintering without reaction.

The slurry for such a coating may comprise at least one colloid or an inorganic polymer, for example selected from colloidal or polymeric silica, alumina, yttria and ceria. For instance, the slurry consists of preformed particulate titanium diboride in colloidal alumina and/or colloidal or polymeric silica. Methods for applying sintered slurries have been described in US Patents 5,364,513 (Sekhar/de Nora) and 5,651,874 (de Nora/Sekhar). These patents disclose forming coatings from a slurry of particulate refractory material in a colloid having a dispersed phase between 0.5 nm and 10 micron, for which it is preferable to choose particle sizes of the particulate refractory material below 100 micron and which are varied such that the packing of particles is optimised.

However, the colloidal slurries described in US Patents 5,364,513 and 5,651,872 and other non-sintered slurries may be improved by the addition of polyethylene glycol which increases the viscosity of the slurry and enhances its capacity to be applied by painting as well as the adherence and coherence of the final protective coating. For instance, the liquid content of the colloidal slurry may contain between 0.5 and 6 weight% , typically 2 to 5 weight%, polyethylene glycol (PEG 300) or a corresponding amount of a polyethylene glycol of different concentration.

The slurry may be applied to the component by painting, spraying or dipping. Use of standard mixing tanks for keeping the slurry in continuous motion without introduction of air bubbles is also possible but neither necessary nor preferred. The rheology of the slurry is such that substantially no settling takes place and the slurry remains in a state of readiness without using expensive and elaborate mechanical mixing device. It is usually sufficient to simply dip and agitate or rotate the component in the static slurry.

After application of a layer of slurry onto the component, the layer can be dried in air at room temperature or at higher temperature, typically 200° to 300°C. The drying process involving heating should be controlled so that the coating does not mud crack.

The coating should be heat treated at a temperature of at least about 450 to 500°C to permit consolidation by sintering the coating on the component before use or in-situ. The melting point of the coating should be above the temperature of operation of the component. The consolidation temperatures may be in the range of 500° to 1500°C.

Care should be taken when the coating is applied onto an oxidisable substrate, in particular carbon. Above 450°C, carbon is exposed to oxidation in the presence of oxygen. Hence, only surfaces of the substrate which are coated with the protective coating should be heat treated at elevated temperature in an oxidising atmosphere.

For instance, if only one end of the component is coated, only this end need be introduced in an oven for heat treatment, the protective coating extending at least over the part of the surface of the component which is inside the oven. Similarly, if an intermediate portion of the component is coated, the coating may be heat treated using a hot collar which is not larger than the coating. When the substrate is only partly coated, the coating preferably extends beyond the heating element during the firing step. Furthermore, when a coating of- a component which is exposed to an oxidising atmosphere above the molten metal meltline is heat treated in-situ, the coating should extend above the meltline to a level at which the temperature is sufficiently low that no substantial oxidation of un-coated parts of the substrate occurs.

The drying and heat treatment of the coating may be achieved in a single heat exposure before use of the component. However, if the component is to be consolidated in-situ, drying should take place before using the component.

The upper part of the component, in particular of the stirrer, especially when it is carbon-based, may be protected from an oxidising and/or corrosive atmosphere with a coating and/or impregnation of a phosphate of aluminium, such as monoaluminium phosphate, aluminium phosphate, aluminium polyphosphate, aluminium metaphosphate, aluminium orthophosphate and mixtures thereof.

Alternatively, the upper part of the component, in particular the stirrer, especially when it is carbon-based, may also be protected against an oxidising or corrosive atmosphere by coating and/or impregnating it with a boron compound, such as a compound selected from boron oxide, boric acid and tetraboric acid.

When the upper part of the component is treated with aluminium phosphate or a boron compound, the extent of the slurry-applied protective coating above the meltline may be reduced.

The stirrer may be arranged to rotate about an axis passing through the lower part of the stirrer, or passing outside its lower part.

The stirrer may be a rotary shaft and/or a rotor with at least one stirrer blade. Rotors may be of any type including prior art rotors as disclosed in the background description, such as high shear rotors provided with vanes for shearing gas and/or flux into fine bubbles, or pump action rotors in which gas and/or flux supply ducts are intercepted by mixing ducts for sucking in, mixing with the gas and/or flux, and expelling molten metal.

The apparatus of the invention may be used in particular for the purification of molten aluminium, molten magnesium, cast iron, molten steel or copper, or for the separation of alloys thereof.

The invention also relates to a rotatable stirrer of an apparatus for the purification of a molten metal as described above. The rotatable stirrer dips during operation in the molten metal, whereby upon rotation of the stirrer the molten metal is stirred and the fluid injected therein is dispersed. It is provided with a rotor and a rotary shaft and comprises an upper part arranged to be engaged with a rotary drive means of the apparatus and a carbon-based lower part which during operation is partly immersed in molten metal up to a meltline.

The carbon-based lower part has an interface portion extending from below to above the meltline. The interface portion is coated with a protective coating of a refractory material to improve the resistance against erosion, oxidation and/or corrosion during operation.

A further aspect of the invention is a method of treating molten metal in an apparatus as disclosed above. The method comprises temporarily or permanently exposing the wear-exposed surface of the coated component to molten metal and imparting a rotary motion to the molten metal about a substantially vertical axis, the contacting molten metal being in motion relative to the wear-exposed surface.

One particular embodiment of the method relates to the purification of molten metal in a purifying apparatus comprising or associated with a vessel for containing molten metal and a coated stirrer as described above. The method comprises injecting a purifying fluid, in particular a gas and/or a flux, into a molten metal contained in the vessel, and rotating the coated stirrer therein to stir and disperse the injected fluid in the molten metal to remove impurities towards the surface.

The method of the invention may be applied to purify the molten metal either in batches or continuously.

Different purifying gases may be injected into the molten metal to purify it, such as a halide gas, in particular chlorine and/or fluorine, or an inert or substantially inert gas, in particular nitrogen and/or argon. One gas or a mixture of different purifying gases may be injected into the molten metal.

A flux for the purification process, for instance a solvent such as an organic or inorganic fluoride, e.g. aluminium, magnesium or potassium fluoride powder or fused fluxes, carbonates, sulphates, nitrides and oxides, may also be injected into the molten metal as such or together with a purifying gas, the flux being usually in the form of a liquid, powder or granule.

Usually, the purifying fluid is injected into the molten metal through a duct in the stirrer or through an auxiliary tube which dips in the molten metal.

During operation in the molten metal, the stirrer may be rotated at a speed of the order of 100 to 500 RPM, in particular in the range of 250 to 400 RPM.

Usually, the coating is exposed to contacting molten metal that has a tangential speed of at least 0.1 m/s relative to the coated component. Depending on the application, the relative speed may be in range of 1 to 10 m/s or even higher, in particular from 2.5 to 4 m/s.

Another aspect of the invention is the use of a refractory material as protective coating against erosion, oxidation and/or corrosion on a rotatable stirrer of an apparatus for the purification of a molten metal.

The invention also relates to the use of a carbon-based component coated with a protective coating of refractory material against erosion, oxidation and/or corrosion as rotatable stirrer in an apparatus for the purification of a molten metal.

### Brief Description of the Drawings

- Figure 1 schematically and by way of example shows part of one embodiment of an apparatus for the purification of a molten metal according to the invention, part of it being shown in an enlarged view and partly cut away; and
- Figure 2 schematically shows a stirrer dipping in molten metal and selectively coated with a refractory material according to the invention.

### Detailed Description

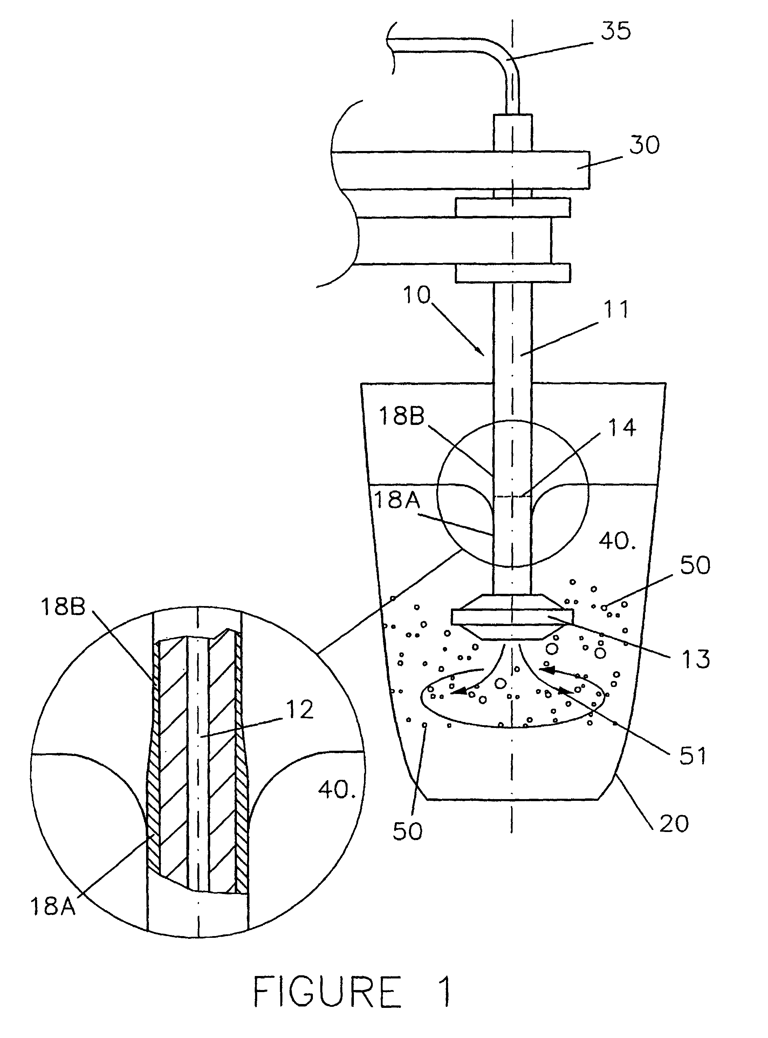

The apparatus partly shown in Figure 1 comprises a vessel 20 containing molten metal 40, such as molten aluminium, to be purified. A rotatable stirrer 10 made of carbon-based material, such as graphite, is partly immersed in the molten metal 40 and is arranged to rotate and disperse a fluid injected therein.

The stirrer 10 comprises a shaft 11 whose upper part is engaged with a rotary drive and support structure 30 which holds and rotates the stirrer 10. The lower part of shaft 11 is carbon-based and dips in the molten metal 40 contained in vessel 20. At the lower end of the shaft 11 is a rotor 13 provided with flanges or other protuberances for stirring the molten metal 40.

Inside the shaft 11, along its length, is an axial duct 12 which is connected at the stirrer's upper end through a flexible tube 35 to a gas supply (not shown), for instance a gas reservoir provided with a gas gate leading to the flexible tube 35.

The axial duct 12 is arranged to supply a fluid, e.g. gas and/or a molten or solid flux, to the rotor 13. The rotor 13 comprises a plurality of apertures connected to the internal duct 12 for injecting the fluid into the molten metal 40, as shown by arrows 51.

According to the invention, the lower part of the shaft 11, i.e. the immersed part and the interface region at or about the meltline 14 of the shaft, as well as the rotor 13 are coated with a protective coating 18A of a refractory material which improves the resistance to erosion, oxidation and corrosion of the stirrer during operation.

As shown in Figure 1, the upper part of the carbon-based shaft 11 is coated with a thin coating 18B of refractory material 18B providing protection against oxidation and corrosion, whereas the coating 18A protecting the immersed part of the shaft 11 and the rotor 13 is a thicker coating of refractory material providing protection against erosion, oxidation and corrosion.

Such a coating gradation is adapted for coatings of stirrers used in batch processes, the lower part of the stirrers being exposed alternately to molten metal and oxidising atmosphere. For stirrers used in continuous metal treatment systems, the gradation may be inverted, i.e. thicker coating above the meltline and thinner coating below the meltline, or the coating may be equally thick above and below the meltline because the lower part of the stirrer is only exposed to molten metal, not to an oxidising atmosphere.

The coatings 18A and 18B may be made of an aluminium-wettable material, such as a refractory hard metal (RHM) having little or no solubility in molten aluminium. Useful RHM include borides of titanium, zirconium, tantalum, chromium, nickel, cobalt, iron, niobium and/or vanadium, for example as disclosed in US patents 5,364,513 (Sekhar/de Nora) and 5,651,874 (de Nora/Sekhar) as well as in the examples below. US patent 5,364,513 also mentions the use of particulate nitrides, silicides, oxides and oxynitrides as refractory material.

A suitable coating consists of particulate refractory hard metal boride in a colloid applied from a slurry of the particulate refractory hard metal boride in a colloid carrier, wherein the colloid comprises at least one of colloidal alumina, silica, yttria, ceria, thoria, zirconia, magnesia, lithia, monoaluminium phosphate or cerium acetate, as described in US Patent 5,651,874 (de Nora/Sekhar). The colloidal carrier has been found to considerably improve the properties of the coating produced by non-reactive sintering.

The method of application comprises applying to the surface of the component a slurry of particulate preformed refractory boride in a colloidal carrier as specified above, followed by drying, and by heat treatment. This method involves painting (by brush or roller), dipping, spraying, or pouring the slurry onto stirrer 10 and allowing to dry before another layer is added. Each applied layer does not need to be entirely dry before the application of the next layer. It is preferred to heat the coating with a suitable heat source so as to completely dry it and improve densification of the coating. Heating and drying take place preferably in non-oxidising atmospheres at about 80-200°C, usually for half an hour to several hours, and further heat treatments are possible.

The surfaces of stirrer 10 to be coated with this slurry may be treated by sand blasting or pickled with acids or fluxes. Similarly the surfaces may be cleaned with an organic solvent such as acetone to remove oily products and other debris prior to the application of the coating. These treatments will enhance the bonding of the coatings to the stirrer.

After coating the surfaces of the stirrer by dipping, painting or spraying the slurry or combinations of such techniques in single or multi-layer coatings and drying, a final coat of the colloid alone may be applied lightly prior to use.

Before or after application of the RHM coating and before use, the surfaces of the stirrer can be painted, sprayed, dipped or infiltrated with reagents and precursors, gels and/or colloids.

To assist rapid wetting of the immersed part of stirrer 10 by molten aluminium, before use the refractory coating may be exposed to molten aluminium in the presence of a molten flux assisting penetration of aluminium into the refractory material, the molten flux for example comprising a fluoride, a chloride or a borate, of at least one of lithium and sodium, or mixtures thereof. Such treatment favours aluminization of the refractory coating by the penetration therein of aluminium.

Likewise, if a stirrer or other component is used for the treatment of a metal other than aluminium, the refractory material may be exposed to the corresponding metal before use, if appropriate in the presence of a flux.

During operation of the apparatus shown in Figure 1, a reactive or non-reactive fluid, in particular a gas alone or a flux, such as a halide, nitrogen and/or argon, is injected into the molten metal 50 contained in the vessel 20 through the flexible tube 35 and stirrer 10 which dips in the molten metal 40.

The stirrer 10 is rotated at a speed of about 100 to 500 RPM so that the injected gas 50 is dispersed throughout the molten metal in finely divided gas bubbles. The dispersed gas bubbles 50, with or without reaction, remove impurities present in the molten metal 40 towards its surface, from where the impurities may be separated thus purifying the molten metal.

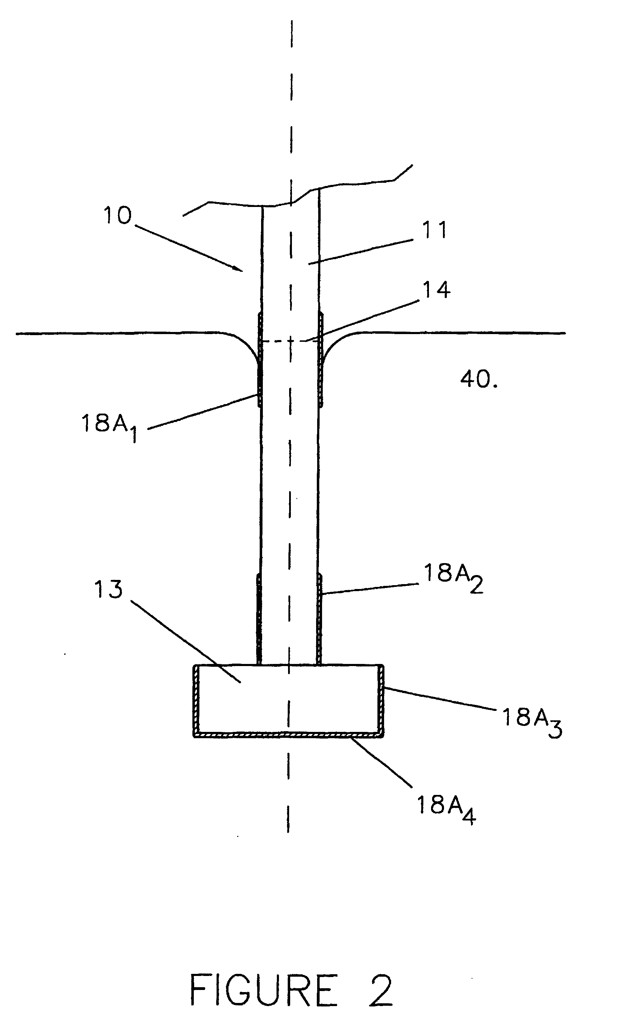

The stirrer 10 schematically shown in Figure 2 dips in a molten metal bath 40 and comprises a shaft 11 and a rotor 13. The stirrer 10 may be of any type, for example similar to the stirrer shown in Figure 1 or other designs known from the prior art. The rotor 13 of stirrer 10 may be a high-shear rotor or a pump action rotor.

In Figure 2, instead of coating the entire shaft 11 and rotor 13, parts of the stirrer 10 liable to erosion are selectively coated with a refractory material, such as a refractory hard metal coating, for example a titanium diboride coating applied in a colloidal slurry as described above.

According to the invention the interface portion at and about the meltline 14 of the carbon-based lower part of the shaft 11 is coated with a refractory interface coating 18A₁, for instance over a length of up to half that of the shaft 11. Excellent results have been obtained with a coating over a third of shaft 11. However, the length of coating 18A₁ could be a quarter of the length of shaft 11 or even less, depending on the design of stirrer 10 and the operating conditions.

In addition to the interface portion of such stirrers, other areas may be liable to erode, again depending on the design and operating conditions of the stirrers. The schematically shown stirrer 10 in Figure 2 illustrates further coated surfaces which are particularly exposed to erosion. The lower end of the shaft 11 adjacent to the rotor 13 is protected with a coating 18A₂, the lateral surface of rotor 13 is protected with a coating 18A₃ and the bottom surfaces of the rotor 13 is coated with a coating 18A₄.

For each specific stirrer design, the coating or different protective coatings on different parts of the stirrer, such as coatings 18A₁, 18A₂, 18A₃ and 18A₄ shown in Figure 2, may be adapted as a function of the expected lifetime of the stirrer. For optimal use, the amount and location of such coatings can be so balanced that they each have approximately the same lifetime.

In an alternative embodiment (not shown), the coating on such stirrers may be continuous as illustrated in Figure 1 but with a graded thickness or composition so as to adapt the resistance against erosion to the intensity of wear of each part of the stirrer, thereby combining the advantages of the different coatings shown in Figure 2.

The invention is understood not to be limited to the details of the apparatus shown in the Figures or described in the above specification. Additional embodiments and modifications within the scope of the claimed invention will be apparent to one of ordinary skill in the art.

For instance, the shaft shown in Figure 1 may be modified so as to consist of an assembly whose non-immersed part is made of a material other than carbon-based, such as a metal and/or a ceramic, which is resistant to oxidation and corrosion and which, therefore, does not need any protective coating, whereas the immersed part of the shaft is made of carbon-based material protected with a protective coating according to the invention. Such a composite shaft would preferably be designed to permit disassembly of the immersed and non-immersed parts so the immersed part can be replaced when worn.

Likewise, a carbon-based non-immersed part of the shaft may be protected from oxidation and corrosion with a coating and/or impregnation of a phosphate of aluminium, in particular applied in the form of a compound selected from monoaluminium phosphate, aluminium phosphate, aluminium polyphosphate, aluminium metaphosphate, aluminium orthophosphate and mixtures thereof. It is also possible to protect the non-immersed part of the shaft with a coating and/or impregnation of a boron compound, such as a compound selected from boron oxide, boric acid and tetraboric acid.

In a modification of the invention, the protective coating may simply be applied to any part of the stirrer in contact with the molten metal, to be protected against erosion, oxidation and corrosion during operation.

In a further modification, the stirrers shown in Figures 1 and 2 may each be surrounded by a tube-like stator extending from above into the molten metal 40 along shaft 11 down to above rotor 13, the stator being arranged to contain between its internal walls and shaft 11 a purifying gas or flux for supplying the gas or flux to the molten metal 40 above rotor 13. Similarly, the stator is preferably coated with a protective coating at least at and about a level corresponding to the meltline 14.

Coatings of refractory material for protecting stirrers or other coated components according to the invention will be further described in the following examples.

### Example 1 (Comparative)

Three non-treated conventional graphite shafts having a diameter of 60 mm were tested in a batch treatment process during which the shafts were rotated at a speed of about 200 rpm in molten Al-7Si-0.5Mg (A356), i.e. containing in weight% 92.5% Al, 7% Si and 0.5% Mg, at about 750-760°C. The tests were carried out in a standard Ramsell Naber™ electric resistance furnace.

Every 60 min. the shafts were extracted from the molten metal for examination and exposed to the oxidising atmosphere for approximately 20 min. After 15, 20 and 24 hours operation respectively, the three conventional shafts were coned down to such an extent that they needed to be replaced.

### Example 2 (Comparative)

Example 1 was repeated with three similar shafts but impregnated with aluminium orthophosphate by a conventional method in an autoclave and dried in an air oven.

Under the same conditions as in Example 1 and after 36, 72 and 72 hours operation respectively, the three impregnated shafts were coned down to such an extent that they needed to be replaced

### Example 3

Three rotary shafts of the same type as the shafts of comparative Example 1 were protected with a refractory coating according to the invention.

A slurry was prepared by mixing particulate TiB₂, two grades of colloidal alumina and polyethylene glycol in the following proportions: 100mg particulate TiB₂ -325 mesh (99% of particles smaller than 45 micron and a mean particle size of 6 micron), 28 ml of a first grade of colloidal alumina (NYACOL® Al-20, a milky liquid with a colloidal particle size of about 40 to 60 nanometer), 24 ml of a second grade of colloidal alumina (CONDEA® 10/2 Sol, a clear, opalescent liquid with a colloidal particle size of about 10 to 30 nanometer) and 0.5 ml of polyethylene glycol (PEG 300).

Before applying the coating, the surface of each shaft was mechanically roughened by shot blasting to increase anchorage of the coating.

A coating was formed by brushing several layers of the above slurry onto the roughened surface of each shaft. Each applied layer was allowed to dry for a few minutes, typically 10 min., at 300°C before application of the next layer. After having reached a thickness of 800 micron, the slurry-applied coating was subjected to a heat treatment in an oxygen-containing atmosphere at 950°C for sintering and consolidation. Alternatively, the coating may be sintered and consolidated without prior drying heat treatment.

The coated shafts were tested in a molten metal treatment process under the same conditions as in comparative Examples 1 and 2. After 168 hours operation, the shafts coated according to the invention were removed from the process. The graphite of each shaft and its coating had remained substantially intact and could have been further used.

The coated shaft can be used in molten aluminium as described in Examples 1 to 3 or for treating of other metals, such as magnesium, iron, steel or copper.

### Example 5

A further modification of Example 3 involves mixing 10 g particulate aluminium-iron alloy made of 60 weight% aluminium and 40 weight% iron to 90 g particulate TiB₂ and suspending this particulate mixture in a carrier consisting of colloidal alumina and polyethylene glycol as in Example 3. Layers of this slurry containing particulate aluminium-iron alloy are applied onto a graphite shaft and dried thereon as in Example 3.

The coating is consolidated under an inert atmosphere by heat treatment at a temperature of 1200°C followed by cooling whereby the aluminium-iron alloy particles are fused into a continuous matrix in which TiB₂ particles are embedded. Such a coated shaft can be used for treating molten metals up to a temperature of about 1100°C, e.g. for treating molten magnesium, aluminium or copper.

## Claims

1. A method of protecting against erosion, oxidation and corrosion a wear-exposed surface of a component of an apparatus for treating molten metal by imparting a rotary motion to the molten metal about a substantially vertical axis, which wear-exposed surface in use is temporarily or permanently in contact with molten metal in motion relative to the wear-exposed surface, said method comprising:
- applying onto the wear-exposed surface of the component one or more layers of a slurry comprising:
a) a particulate refractory material, in particular refractory material selected from borides of titanium, zirconium, vanadium, tantalum, nickel, molybdenum, chromium and iron, and carbides or oxides of aluminium, silicon, titanium, zirconium, vanadium, tantalum, nickel, molybdenum, chromium, copper and iron, or a combination thereof; and
b) a heat stable inorganic binder comprising at least one colloid and/or inorganic polymer selected from colloidal alumina, silica, yttria, ceria, thoria, zirconia, magnesia, lithia, monoaluminium phosphate and cerium acetate, and polymeric silica, alumina, yttria and ceria; and
- sintering and consolidating by heat treating the slurry-applied layer(s) to form a sintered coating of the particulate refractory material consolidated in the dried heat stable inorganic binder, which coating protects the wear-exposed surface against erosion, oxidation and corrosion.

2. The method of claim 1, wherein the slurry contains polyethylene glycol.

3. The method of claim 1 or 2, wherein a part of the component is coated and/or impregnated with a phosphate of aluminium to protect it against an oxidising or corrosive atmosphere.

4. The method of claim 3, wherein said phosphate of aluminium is selected from monoaluminium phosphate, aluminium phosphate, aluminium polyphosphate, aluminium metaphosphate, aluminium orthophosphate, and mixtures thereof.

5. The method of any preceding claim, wherein a part of the component is coated and/or impregnated with a boron compound to protect it against an oxidising or corrosive atmosphere.

6. The method of claim 5, wherein said boron compound is selected from boron oxide, boric acid and tetraboric acid.

7. An apparatus for treating molten metal, comprising a component exposable to molten metal to be treated and means for imparting a rotary motion to the molten metal about a substantially vertical axis, the apparatus being so arranged that during use at least part of a wear-exposed surface of the component is temporarily or permanently in contact with molten metal, the contacting molten metal being in motion relative to the wear-exposed surface, the wear-exposed surface being coated with a slurry-applied sintered protective coating of particulate refractory material, in particular refractory material selected from borides of titanium, zirconium, vanadium, tantalum, nickel, molybdenum, chromium and iron, and carbides or oxides of aluminium, silicon, titanium, zirconium, vanadium, tantalum, nickel, molybdenum, chromium, copper and iron, or a combination thereof, consolidated in a heat stable inorganic binder comprising at least one dried colloid and/or inorganic polymer selected from dried colloidal alumina, silica, yttria, ceria, thoria, zirconia, magnesia, lithia, monoaluminium phosphate and cerium acetate, and polymeric silica, alumina, yttria and ceria the protective coating protecting the wear-exposed surface against erosion, oxidation and corrosion.

8. The apparatus of claim 7, for separating molten metal from impurities and/or separating constituents of an alloy metal by centrifugal and/or gravitational force.

9. The apparatus of claim 7 or 8, wherein at least the coated part of the coated component is made of carbon-based or carbide-based material.

10. The apparatus of claim 9, wherein at least the coated part of the coated component is made of carbon-based material selected from petroleum coke, metallurgical coke, anthracite, graphite, amorphous carbon or mixtures thereof.

11. The apparatus of claim 7 or 8, wherein at least the coated part of the coated component is made of metal-based material.

12. The apparatus of any one of claims 7 to 11, comprising a coated component which is a rotatable stirrer arranged to dip in and rotate the molten metal during operation.

13. The apparatus of any one of claims 7 to 12, comprising a coated component which is a vessel for containing the rotating molten metal, the vessel being coated with said refractory coating.

14. The apparatus of claim 13, wherein the vessel is rotatable.

15. The apparatus of any one of claims 7 to 14, comprising a coated component which is a stator that in use dips in the molten metal and is arranged to deliver treating fluid into the molten metal.

16. The apparatus of claim 15 when depending on claim 12, wherein the stirrer extends through and protrudes from the stator.

17. The apparatus of any one of claims 7 to 16, comprising means for generating a rotational magnetic field in the molten metal.

18. The apparatus of any one of claims 7 to 17, wherein the coated component has an upper part and a lower part, the lower part during operation being partly exposed to molten metal up to a meltline, the component having an interface portion extending from below to above said meltline which is coated with the slurry-applied protective coating.

19. The apparatus of claim 12 or any one of claims 13 to 18 when depending on claim 12, for the purification of molten metal, comprising means for injecting a fluid, in particular a gas and/or a flux, into the molten metal to remove impurities towards the surface thereof so that upon rotation of the stirrer during use the molten metal is stirred and the fluid injected therein is dispersed, the stirrer having an upper part engaged with a rotary drive means and a carbon-based lower part which during operation is partly immersed in molten metal up to a meltline, the carbon-based lower part of the stirrer having an interface portion that extends from below to above said meltline, the interface portion being coated with the slurry-applied protective coating.

20. The apparatus of claim 18 or 19, wherein said lower part of the coated component is selectively coated on a plurality of areas to be protected.

21. The apparatus of claim 18 or 19, wherein said lower part of the coated component is entirely coated.

22. The apparatus of any one of claims 18 to 21, wherein said upper part of the coated component is coated with a thin coating of refractory material against oxidation and corrosion, and said lower part of the component is coated with a thick coating of refractory material against erosion, oxidation and corrosion.

23. The apparatus of any one of claims 7 to 22, wherein the protective coating comprises a refractory hard metal selected from borides of titanium, zirconium, vanadium, tantalum, nickel, molybdenum, chromium and iron.

24. The apparatus of claim 23, wherein the protective coating comprises titanium diboride.

25. The apparatus of any one of claims 7 to 24, wherein the protective coating comprises at least one carbide or oxide of aluminium, silicon, titanium, zirconium, vanadium, tantalum, nickel, molybdenum, chromium, copper and iron, or a combination thereof.

26. The apparatus of claim 25, wherein the protective coating comprises corundum or fused alumina.

27. The apparatus of any one of claims 7 to 26, wherein the protective coating comprises at least one dried colloid or inorganic polymer selected from dried colloidal or polymeric silica, alumina, yttria and ceria.

28. The apparatus of claim 27, wherein the protective coating comprises preformed particulate titanium diboride in dried colloidal alumina and/or colloidal or polymeric silica.

29. The apparatus of any one of claims 7 to 28, wherein during use the protective coating is exposed to treating additives or impurities carried in and/or on the molten metal, the coating surface being non-adherent to the treating additives or impurities.

30. The apparatus of any one of claims 7 to 29, wherein the coated component has a part which is protected against an oxidising or corrosive atmosphere by a coating and/or impregnation of a phosphate of aluminium.

31. The apparatus of any one of claims 7 to 30, wherein the coated component has a part which is protected against an oxidising or corrosive atmosphere by a coating and/or impregnation of a boron compound.

32. The apparatus of claim 12 or any one of claims 13 to 31 when depending on claim 14, wherein the stirrer is arranged to rotate about an axis passing through the lower part of the stirrer.

33. A rotatable stirrer of an apparatus for the purification of a molten metal as defined in claim 12 or any one of claims 13 to 32 when depending on claim 12, the stirrer being provided with a rotor and a rotary shaft and comprising an extremity arranged to be engaged with a rotary drive means of the apparatus and a carbon-based part which during operation is partly immersed in molten metal up to a meltline, the carbon-based part having an interface portion extending from below to above said meltline, the interface portion forming a wear-exposed surface and being coated with the slurry-applied sintered protective coating of the particulate refractory material consolidated in the heat stable inorganic binder comprising at least one of said dried colloids and inorganic polymers.

34. The stirrer of claim 33, wherein the rotor has at least one stirrer blade.

35. The stirrer of claim 33, which comprises a high shear rotor.

36. The stirrer of claim 33, which comprises a pump action rotor.

37. The stirrer of any one of claims 33 to 36, comprising a duct for the injection of purifying fluid.

38. A method of treating molten metal in an apparatus as defined in any one of claims 7 to 32, comprising temporarily or permanently exposing the wear-exposed surface of the coated component to molten metal and imparting a rotary motion to the molten metal about a substantially vertical axis, the contacting molten metal being in motion relative to the wear-exposed surface.

39. The method of claim 38 for purifying molten metal in an apparatus comprising a vessel for containing molten metal and a coated stirrer as defined in any one of claims 33 to 38, the method comprising injecting a purifying fluid, in particular a gas and/or a flux, into a molten metal contained in the vessel, and rotating the coated stirrer therein to stir and disperse the injected purifying fluid in the molten metal to remove impurities towards the surface thereof.

40. The method of claim 39, wherein the molten metal is purified in batches.

41. The method of claim 40, wherein the molten metal is continuously purified.

42. The method of claim 39, 40 or 41, comprising injecting a halide gas, in particular chlorine and/or fluorine, as purifying gas into the molten metal.

43. The method of any one of claims 39 to 42, comprising injecting in inert gas, in particular nitrogen and/or argon, as purifying gas into the molten metal.

44. The method of any one of claims 39 to 43, comprising injecting the purifying gas through a tube which dips in the molten metal.

45. The method of any one of claims 39 to 43, comprising injecting the purifying gas into the molten metal through a duct in the stirrer.

46. The method of any one of claims 39 to 45, comprising rotating the stirrer in the molten metal at a speed of 100 to 500 RPM, in particular 250 to 400 RPM.

47. The method of any one of claims 39 to 46, for purifying molten aluminium.

48. The method of any one of claims 39 to 46, for purifying molten magnesium.

49. The method of any one of claims 39 to 46, for purifying cast iron or molten steel.

50. The method of any one of claims 39 to 46, for purifying molten copper.

## Patentansprüche

1. Verfahren zum Schützen gegen Erosion, Oxidation und Korrosion einer der Abnutzung ausgesetzten Oberfläche von einer Komponente einer Vorrichtung zur Behandlung von geschmolzenem Metall, indem auf das geschmolzene Metall eine Drehbewegung um eine im wesentlichen vertikale Achse aufgebracht wird, wobei sich die der Abnutzung ausgesetzte Oberfläche bei Betrieb zeitweise oder dauerhaft mit geschmolzenem Metall in Kontakt befindet, das sich relativ zu der der Abnutzung ausgesetzten Oberfläche in Bewegung befindet, wobei das Verfahren umfasst:
- Aufbringen von einer oder mehreren Schichten aus einem Schlamm auf die der Abnutzung ausgesetzte Oberfläche der Komponente, mit:
a) einem partikulären, hitzebeständigen Material, insbesondere hitzebeständiges Material, das aus Boriden von Titanium, Zirkonium, Vanadium, Tantal, Nickel, Molybdän, Chrom und Eisen sowie Karbiden und Oxiden von Aluminium, Silicium, Titanium, Zirkonium, Vanadium, Tantal, Nickel, Molybdän, Chrom, Kupfer und Eisen oder einer Kombination daraus ausgewählt ist; und
b) einem hitzestabilen, anorganischen Bindemittel mit zumindest einem Kolloid und/oder anorganischem Polymer, das aus kolloidalem Aluminiumoxid, Siliciumoxid, Yttriumoxid, Ceroxid, Thoriumoxid, Zirkoniumoxid, Magnesiumoxid, Lithiumoxid, Monoaluminiumphosphat und Ceracetat sowie aus polymerischem Siliciumoxid, Aluminiumoxid, Yttriumoxid und Ceroxid ausgewählt ist; und
- Sintern und Verfestigen durch Hitzebehandlung der Schlamm-aufgebrachten Schicht(en), um eine gesinterte Beschichtung aus dem partikulären, hitzebeständigen Material zu bilden, das in dem getrockneten, hitzestabilen, anorganischen Bindemittel verfestigt ist, wobei die Beschichtung die der Abnutzung ausgesetzte Oberfläche gegen Erosion, Oxidation und Korrosion schützt.

2. Verfahren nach Anspruch 1, bei dem der Schlamm Polyethylenglykol enthält.

3. Verfahren nach Anspruch 1 oder 2, bei dem ein Bereich der Komponente mit einem Phosphat von Aluminium beschichtet und/oder imprägniert ist, um ihn gegen eine oxidierende oder korrosive Atmosphäre zu schützen.

4. Verfahren nach Anspruch 3, bei dem das Phosphat von Aluminium aus Monoaluminiumphosphat, Aluminiumphosphat, Aluminiumpolyphosphat, Aluminiummetaphosphat, Aluminiumorthophosphat und Mischungen davon ausgewählt ist.

5. Verfahren nach einem der vorhergehenden Ansprüche, bei dem ein Bereich der Komponente mit einer Bor-Verbindung beschichtet und/oder imprägniert ist, um ihn gegen eine oxidierende oder korrosive Atmosphäre zu schützen.

6. Verfahren nach Anspruch 5, bei dem die Bor-Verbindung aus Boroxid, Borsäure und Tetraborsäure ausgewählt ist.

7. Vorrichtung zum Behandeln von geschmolzenem Metall, mit einer Komponente, die geschmolzenem Material ausgesetzt sein kann, das behandelt werden soll, und einer Einrichtung zum Aufbringen einer Drehbewegung auf das geschmolzene Metall um eine im wesentlichen vertikale Achse, wobei die Vorrichtung dazu ausgestaltet ist, dass sich zumindest ein Bereich der der Abnutzung ausgesetzten Oberfläche der Komponente während des Betriebs zeitweise oder dauerhaft mit geschmolzenem Metall in Kontakt befindet, wobei sich das in Kontakt befindliche geschmolzene Metall relativ zur der Abnutzung ausgesetzten Oberfläche in Bewegung befindet, wobei die der Abnutzung ausgesetzte Oberfläche mit einer Schlamm-aufgebrachten, gesinterten, schützenden Beschichtung aus partikulärem, hitzebeständigem Material beschichtet ist, insbesondere hitzebeständiges Material, das aus Boriden von Titanium, Zirkonium, Vanadium, Tantal, Nickel, Molybdän, Chrom und Eisen sowie Karbiden und Oxiden von Aluminium, Silicium, Titanium, Zirkonium, Vanadium, Tantal, Nickel, Molybdän, Chrom, Kupfer und Eisen oder einer Kombination daraus ausgewählt ist, und in einem hitzestabilen, anorganischen Bindemittel verfestigt ist, mit zumindest einem getrockneten Kolloid und/oder einem anorganischen Polymer, das aus getrocknetem, kolloidalen Aluminiumoxid, Siliciumoxid, Yttriumoxid, Ceroxid, Thoriumoxid, Zirkoniumoxid, Magnesiumoxid, Lithiumoxid, Monoaluminiumphosphat und Ceracetat sowie aus polymerischem Siliciumoxid, Aluminiumoxid, Yttriumoxid und Ceroxid ausgewählt ist, wobei die schützende Beschichtung die der Abnutzung ausgesetzte Oberfläche gegen Erosion, Oxidation und Korrosion schützt.

8. Vorrichtung nach Anspruch 7, um durch Zentrifugal- und/oder Gravitationskräfte geschmolzenes Metall von Verunreinigungen zu trennen und/oder Bestandteile von einem Legierungsmetall zu trennen.

9. Vorrichtung nach Anspruch 7 oder 8, bei der der beschichtete Bereich der beschichteten Komponente aus einem auf Kohlenstoff oder auf Karbid basierenden Material hergestellt ist.

10. Vorrichtung nach Anspruch 9, bei der zumindest der beschichtete Bereich der beschichteten Komponente aus auf Kohlenstoff basierendem Material hergestellt ist, das aus Petrolkoks, metallurgischem Koks, Anthrazit, Graphit, amorphem Kohlenstoff oder Mischungen davon ausgewählt ist.

11. Vorrichtung nach Anspruch 7 oder 8, bei der zumindest der beschichtete Bereich der beschichteten Komponente aus einem auf Metall basierenden Material hergestellt ist.

12. Vorrichtung nach einem der Ansprüche 7 bis 11, mit einer beschichteten Komponente, die ein drehbares Rührwerk ist, das dazu ausgestaltet ist, um während des Betriebs in das geschmolzene Metall einzutauchen und dieses in Drehung zu versetzen.

13. Vorrichtung nach einem der Ansprüche 7 bis 12, mit einer beschichteten Komponente, die ein Kessel ist, um das in Drehung versetzte, geschmolzene Metall aufzunehmen, wobei der Kessel mit der hitzebeständigen Beschichtung beschichtet ist.

14. Vorrichtung nach Anspruch 13, bei der der Kessel drehbar ist.

15. Vorrichtung nach einem der Ansprüche 7 bis 14, mit einer beschichteten Komponente, die ein Stator ist, der bei Betrieb in das geschmolzene Material eingetaucht und dazu ausgestaltet ist, Behandlungsfluid in das geschmolzene Metall zu liefern.

16. Vorrichtung nach Anspruch 15, sofern abhängig von Anspruch 12, bei der sich das Rührwerk durch den Stator erstreckt und davon vorsteht.

17. Vorrichtung nach einem der Ansprüche 7 bis 16, mit einer Einrichtung zum Erzeugen eines magnetischen Rotationsfeldes in dem geschmolzenen Metall.

18. Vorrichtung nach einem der Ansprüche 7 bis 17, bei der die beschichtete Komponente einen oberen Bereich und einen unteren Bereich hat, wobei der untere. Teil während des Betriebs teilweise dem geschmolzenen Metall bis zu einer Schmelzlinie ausgesetzt ist, wobei die Komponente einen Übergangsbereich hat, der sich von unterhalb bis oberhalb der Schmelzlinie erstreckt und der mit der Schlamm-aufgebrachten, schützenden Beschichtung beschichtet ist.

19. Vorrichtung nach Anspruch 12 oder nach einem der Ansprüche 13 bis 18, sofern abhängig von Anspruch 12, zur Purifikation von geschmolzenem Metall, mit Einrichtungen zum Einleiten eines Fluids, insbesondere ein Gas und/oder ein Mittel, in das geschmolzene Metall, um Verunreinigungen in Richtung auf die Oberfläche davon zu entfernen, so dass das geschmolzene Metall während des Betriebs bei Drehung des Rührwerks gerührt und das darin eingeleitete Fluid dispergiert wird, wobei das Rührwerk einen oberen Bereich, der mit einer Drehantriebseinrichtung eingreift, und einen auf Kohlenstoff basierenden unteren Bereich hat, der während des Betriebs teilweise bis zu der Schmelzlinie in das geschmolzene Metall eingetaucht ist, wobei der auf Kohlenstoff basierende untere Bereich des Rührwerks einen Übergangsbereich hat, der sich von unterhalb bis oberhalb der Schmelzlinie erstreckt, wobei der Übergangsbereich mit der Schlamm-aufgebrachten, schützenden Beschichtung beschichtet ist.

20. Vorrichtung nach Anspruch 18 oder 19, bei der der untere Bereich der beschichteten Komponente wahlweise auf einer Vielzahl von zu schützenden Gebieten beschichtet ist.

21. Vorrichtung nach Anspruch 18 oder 19, bei der der untere Bereich der beschichteten Komponente vollständig beschichtet ist.

22. Vorrichtung nach einem der Ansprüche 18 bis 21, bei der der obere Bereich der beschichteten Komponente mit einer dünnen Beschichtung aus hitzebeständigem Material gegen Oxidation und Korrosion beschichtet ist und der untere Bereich der Komponente mit einer dicken Beschichtung aus dem hitzebeständigen Material gegen Erosion, Oxidation und Korrosion beschichtet ist.

23. Vorrichtung nach einem der Ansprüche 17 bis 22, bei der die schützende Beschichtung ein hitzebeständiges, hartes Metall enthält, das aus Boriden von Titanium, Zirkonium, Vanadium, Tantal, Nickel, Mobybdän, Chrom und Eisen ausgewählt ist.

24. Vorrichtung nach Anspruch 23, bei der die schützende Beschichtung Titaniumdiborid enthält.

25. Vorrichtung nach einem der Ansprüche 7 bis 24, bei der die schützende Beschichtung zumindest ein Karbid oder Oxid von Aluminium, Silicium, Titanium, Zirkonium, Vanadium, Tantal, Nickel, Molybdän, Chrom, Kupfer und Eisen oder eine Kombination davon enthält.

26. Vorrichtung nach Anspruch 25, bei der die schützende Beschichtung Korund oder geschmolzenes Aluminiumoxid enthält.

27. Vorrichtung nach einem der Ansprüche 7 bis 26, bei der die schützende Beschichtung zumindest ein getrocknetes Kolloid oder anorganisches Polymer enthält, das aus getrocknetem, kolloidalen oder polymerischen Siliciumoxid, Aluminiumoxid, Yttriumoxid und Ceroxid ausgewählt ist.

28. Vorrichtung nach Anspruch 27, bei der die schützende Beschichtung vorgeformtes, partikuläres Titaniumdiborid in getrocknetem, kolloidalen Aluminiumoxid und/oder kolloidalem oder polymerischem Siliciumoxid enthält.

29. Vorrichtung nach einem der Ansprüche 7 bis 28, bei der die schützende Beschichtung während des Betriebs Behandlungsadditiven und Verunreinigungen ausgesetzt ist, die sich in und/oder auf dem geschmolzenen Material befinden, wobei die Beschichtungsoberfläche bezüglich der Behandlungsadditive oder Verunreinigungen nicht haftend ist.

30. Vorrichtung nach einem der Ansprüche 7 bis 29, bei der die beschichtete Komponenten einen Bereich hat, der durch eine Beschichtung und/oder Imprägnierung aus einem Phosphat von Aluminium gegen eine oxidierende oder korrosive Atmosphäre geschützt ist.

31. Vorrichtung nach einem der Ansprüche 7 bis 30, bei der die beschichtete Komponente einen Bereich hat, der durch eine Beschichtung und/oder Imprägnierung einer Bor-Verbindung gegen eine oxidierende oder korrosive Atmosphäre geschützt ist.

32. Vorrichtung nach Anspruch 12 oder nach einem der Ansprüche 13 bis 31, sofern abhängig von Anspruch 14, bei der ein Rührwerk dazu ausgestaltet ist, um sich um eine Achse zu drehen, die durch den unteren Bereich des Rührwerks führt.

33. Drehbares Rührwerk von einer Vorrichtung zur Purifikation von einem geschmolzenen Metall nach Anspruch 12 oder nach einem der Ansprüche 13 bis 32, sofern abhängig von Anspruch 12, wobei das Rührwerk mit einem Rotor und einer Drehwelle versehen ist sowie ein Ende, das dazu ausgestaltet ist, um mit einer Drehantriebseinrichtung der Vorrichtung einzugreifen, und einen auf Kohlenstoff basierenden Bereich hat, der während des Betriebs teilweise bis zu einer Schmelzlinie in geschmolzenes Metall eingetaucht ist, wobei der auf Kohlenstoff basierende Bereich einen Übergangsbereich hat, der sich von unterhalb bis oberhalb der Schmelzlinie erstreckt, wobei der Übergangsbereich eine der Abnutzung ausgesetzte Oberfläche bildet und mit der Schlamm-aufgebrachten, gesinterten, schützenden Beschichtung aus dem partikulären, hitzebeständigen Material beschichtet ist, das in dem hitzestabilen, anorganischen Bindemittel verfestigt ist, das zumindest eines von den getrockneten Kolloiden und anorganischen Polymeren enthält.

34. Rührwerk nach Anspruch 33, bei dem der Rotor zumindest eine Rührwerkschaufel aufweist.

35. Rührwerk nach Anspruch 33, das einen Rotor mit hoher Rührleistung aufweist.

36. Rührwerk nach Anspruch 33, das einen Rotor mit Pumpwirkung aufweist.

37. Rührwerk nach einem der Ansprüche 33 bis 36, mit einer Rohrleitung für die Einleitung von reinigendem Fluid.

38. Verfahren zum Behandeln von geschmolzenem Metall in einer Vorrichtung nach einem der Ansprüche 7 bis 32, bei dem die der Abnutzung ausgesetzte Oberfläche der beschichteten Komponente zeitweise oder dauerhaft dem geschmolzenen Metall ausgesetzt ist, und bei dem auf das geschmolzene Metall eine Drehbewegung um eine im wesentlichen vertikale Achse aufgebracht wird, wobei sich das in Kontakt befindliche geschmolzene Metall relativ zu der der Abnutzung ausgesetzten Oberfläche in Bewegung befindet.

39. Verfahren nach Anspruch 38 zur Purifikation von geschmolzenem Metall in einer Vorrichtung nach einem der Ansprüche 33 bis 38, die einen Kessel zur Aufnahme von geschmolzenem Metall und ein beschichtetes Rührwerk aufweist, wobei das Verfahren das Einleiten von einem reinigenden Fluid, insbesondere ein Gas und/oder ein Mittel, in das geschmolzene Metall, das in dem Kessel enthalten ist, und Drehen des beschichteten Rührwerks darin umfasst, um das eingeleitete reinigende Fluid in dem geschmolzenen Metall zu verrühren und zu dispergieren, um Verunreinigungen in Richtung der Oberfläche davon zu entfernen.

40. Verfahren nach Anspruch 39, bei dem das geschmolzene Metall diskontinuierlich gereinigt wird.

41. Verfahren nach Anspruch 40, bei dem das geschmolzene Metall kontinuierlich gereinigt wird.

42. Verfahren nach Anspruch 39, 40 oder 41, mit dem Einleiten eines Halogenid-Gases, insbesondere Chlor und/oder Fluor, als reinigendes Gas in das geschmolzene Metall.

43. Verfahren nach einem der Ansprüche 39 bis 42, mit dem Einleiten eines inerten Gases, insbesondere Stickstoff und/oder Argon, als reinigendes Gas in das geschmolzene Metall.

44. Verfahren nach einem der Ansprüche 39 bis 43, mit dem Einleiten des reinigenden Gases durch eine Rohrleitung, die in das geschmolzene Metall eingetaucht ist.

45. Verfahren nach einem der Ansprüche 39 bis 43, mit dem Einleiten des reinigenden Gases in das geschmolzene Metall durch eine Rohrleitung in dem Rührwerk.

46. Verfahren nach einem der Ansprüche 39 bis 45, mit dem Drehen des Rührwerks in dem geschmolzenen Metall mit einer Drehzahl von 100 bis 500 Umdrehungen/Minute, insbesondere 250 bis 400 Umdrehungen/Minute.

47. Verfahren nach einem der Ansprüche 39 bis 46 zur Purifikation von geschmolzenem Aluminium.

48. Verfahren nach einem der Ansprüche 39 bis 46 zur Purifikation von geschmolzenem Magnesium.

49. Verfahren nach einem der Ansprüche 39 bis 46 zur Purifikation von Gusseisen oder geschmolzenem Stahl.

50. Verfahren nach einem der Ansprüche 39 bis 46 zur Purifikation von geschmolzenem Kupfer.

## Revendications

1. Procédé pour protéger contre l'érosion, l'oxydation et la corrosion, une surface exposée à l'usure d'un composant d'un appareil pour traiter du métal en fusion en imprimant un mouvement rotatif au métal en fusion autour d'un axe sensiblement vertical, laquelle surface exposée à l'usure est, en utilisation, en contact de façon temporaire ou permanente avec le métal en fusion en mouvement par rapport à la surface exposée à l'usure, ledit procédé consistant à :
- appliquer sur la surface exposée à l'usure du composant une ou plusieurs couches d'un coulis comprenant :
a) une matière réfractaire particulaire, en particulier une matière réfractaire choisie à partir de borures de titane, zirconium, vanadium, tantale, nickel, molybdène, chrome et fer, et de carbures ou oxydes d'aluminium, silicium, titane, zirconium, vanadium, tantale, nickel, molybdène, chrome, cuivre et fer, ou une combinaison de ceux-ci ; et
b) un liant inorganique stable à la chaleur comprenant au moins un colloïde et/ou polymère inorganique choisi à partir d'alumine, silice, yttria, oxyde de cérium, thorine, zircone, magnésie, lithine, phosphate de monoaluminium et acétate de cérium colloïdaux, et de silice, alumine, yttria et oxyde de cérium polymères ; et
- fritter et consolider par traitement thermique la ou les couches appliquées de coulis pour former un revêtement fritté de la matière réfractaire particulaire consolidée dans le liant inorganique stable à la chaleur séché, lequel revêtement protège la surface exposée à l'usure contre l'érosion, l'oxydation et la corrosion.

2. Procédé selon la revendication 1, dans lequel le coulis contient du polyéthylèneglycol.

3. Procédé selon la revendication 1 ou 2, dans lequel une partie du composant est revêtu et/ou imprégné d'un phosphate d'aluminium pour le protéger contre une atmosphère oxydante ou corrosive.

4. Procédé selon la revendication 3, dans lequel ledit phosphate d'aluminium est choisi à partir de phosphate de monoaluminium, phosphate d'aluminium, polyphosphate d'aluminium, métaphosphate d'aluminium, orthophosphate d'aluminium, et de mélanges de ceux-ci.

5. Procédé selon une quelconque revendication précédente, dans lequel une partie du composant est revêtue et/ou imprégnée avec un composé de bore pour le protéger contre une atmosphère oxydante ou corrosive.

6. Procédé selon la revendication 5, dans lequel ledit composé de bore est choisi à partir d'oxyde de bore, d'acide borique et d'acide tétraborique.

7. Appareil pour traiter un métal en fusion, comprenant un composant exposable au métal en fusion à traiter et des moyens pour imprimer un mouvement de rotation au métal en fusion autour d'un axe sensiblement vertical, l'appareil étant agencé de sorte que, pendant l'utilisation, au moins une partie d'une surface exposée à l'usure du composant est en contact de façon temporaire ou permanente avec le métal en fusion, le métal en fusion en contact étant en mouvement par rapport à la surface exposée à l'usure, la surface exposée à l'usure étant revêtue d'un revêtement protecteur fritté appliqué de coulis de matière réfractaire particulaire, en particulier une matière réfractaire choisie à partir de borures de titane, zirconium, vanadium, tantale, nickel, molybdène, chrome et fer, et de carbures ou oxydes d'aluminium, silicium, titane, zirconium, vanadium, tantale, nickel, molybdène, chrome, cuivre et fer, ou une combinaison de ceux-ci, consolidée dans un liant inorganique stable à la chaleur comprenant au moins un colloïde et/ou un polymère inorganique séchés choisis à partir d'alumine, silice, yttria, oxyde de cérium, thorine, zircone, magnésie, lithine, phosphate de monoaluminium et acétate de cérium colloïdaux, et de silice, alumine, yttria et oxyde de cérium polymères, le revêtement protecteur protégeant la surface exposée à l'usure contre l'érosion, l'oxydation et la corrosion.

8. Appareil selon la revendication 7, pour séparer le métal en fusion d'impuretés et/ou pour séparer des constituants d'un alliage métallique par une force centrifuge et/ou gravitationnelle.

9. Appareil selon la revendication 7 ou 8, dans lequel au moins la partie revêtue du composant revêtu est réalisée en une matière à base de carbone ou à base de carbure.

10. Appareil selon la revendication 9, dans lequel au moins la partie revêtue du composant revêtu est réalisée en une matière à base de carbone choisie à partir de coke de pétrole, coke métallurgique, anthracite, graphite, carbone amorphe ou mélanges de ceux-ci.

11. Appareil selon la revendication 7 ou 8, dans lequel au moins la partie revêtue du composant revêtu est réalisée en une matière à base de métal.

12. Appareil selon l'une quelconque des revendications 7 à 11, comprenant un composant revêtu qui est un agitateur pouvant tourner agencé pour plonger dans et faire tourner le métal en fusion pendant le fonctionnement.

13. Appareil selon l'une quelconque des revendications 7 à 12, comprenant un composant revêtu qui est un récipient pour contenir le métal en fusion en rotation, le récipient étant revêtu dudit revêtement réfractaire.

14. Appareil selon la revendication 13, dans lequel le récipient peut tourner.

15. Appareil selon l'une quelconque des revendications 7 à 14, comprenant un composant revêtu qui est un stator qui, à l'utilisation, plonge dans le métal en fusion et est agencé pour délivrer un fluide de traitement dans le métal en fusion.

16. Appareil selon la revendication 15 quand elle dépend de la revendication 12, dans lequel l'agitateur s'étend à travers et fait saillie du stator.

17. Appareil selon l'une quelconque des revendications 7 à 16, comprenant des moyens pour engendrer un champ magnétique rotatif dans le métal en fusion.

18. Appareil selon l'une quelconque des revendications 7 à 17, dans lequel le composant revêtu présente une partie supérieure et une partie inférieure, la partie inférieure, pendant le fonctionnement, étant partiellement exposée au métal en fusion jusqu'à une ligne de fusion, le composant ayant une portion d'interface s'étendant du dessous au dessus de ladite ligne de fusion qui est revêtue avec le revêtement protecteur appliqué de coulis.

19. Appareil selon la revendication 12 ou une quelconque des revendications 13 à 18 quand elles dépendent de la revendication 12, pour la purification de métal en fusion, comprenant des moyens pour injecter un fluide, en particulier un gaz et/ou un flux, dans le métal en fusion pour retirer les impuretés vers sa surface de sorte que, lors de la rotation de l'agitateur pendant l'utilisation, le métal en fusion est agité et le fluide injecté dans celui-ci est dispersé, l'agitateur ayant une partie supérieure engagée avec des moyens d'entraînement rotatifs et une partie inférieure à base de carbone qui, pendant le fonctionnement, est partiellement immergée dans le métal en fusion jusqu'à une ligne de fusion, la partie inférieure à base de carbone de l'agitateur ayant une portion d'interface qui s'étend du dessous au dessus de ladite ligne de fusion, la portion d'interface étant revêtue du revêtement protecteur appliqué de coulis.

20. Appareil selon la revendication 18 ou 19, dans lequel ladite partie inférieure du composant revêtu est sélectivement revêtue sur une pluralité de zones à protéger.

21. Appareil selon la revendication 18 ou 19, dans lequel ladite partie inférieure du composant revêtu est entièrement revêtue.

22. Appareil selon une quelconque des revendications 18 à 21, dans lequel ladite partie supérieure du composant revêtu est revêtue d'un revêtement mince de matière réfractaire contre l'oxydation et la corrosion, et ladite partie inférieure du composant est revêtue d'un revêtement épais de matière réfractaire contre l'érosion, l'oxydation et la corrosion.

23. Appareil selon une quelconque des revendications 7 à 22, dans lequel le revêtement protecteur comprend un métal dur réfractaire choisi à partir de borures de titane, zirconium, vanadium, tantale, nickel, molybdène, chrome et fer.

24. Appareil selon la revendication 23, dans lequel le revêtement protecteur comprend du diborure de titane.

25. Appareil selon une quelconque des revendications 7 à 24, dans lequel le revêtement protecteur comprend au moins un carbure ou un oxyde d'aluminium, silicium, titane, zirconium, vanadium, tantale, nickel, molybdène, chrome, cuivre et fer, ou une combinaison de ceux-ci.

26. Appareil selon la revendication 25, dans lequel le revêtement protecteur comprend du corindon ou de l'alumine fondue.

27. Appareil selon une quelconque des revendications 7 à 26, dans lequel le revêtement protecteur comprend au moins un colloïde ou polymère inorganique séché, choisi à partir de silice, alumine, yttria et d'oxyde de cérium polymères ou colloïdaux séchés.

28. Appareil selon la revendication 27, dans lequel le revêtement protecteur comprend du diborure de titane particulaire préformé dans de l'alumine colloïdale séchée et/ou de la silice colloïdale ou polymère séchée.

29. Appareil selon une quelconque des revendications 7 à 28, dans lequel, pendant l'utilisation, le revêtement protecteur est exposé à des additifs ou impuretés de traitement portés dans et/ou sur le métal en fusion, la surface de revêtement étant non adhérente aux additifs ou impuretés de traitement.

30. Appareil selon une quelconque des revendications 7 à 29, dans lequel le composant revêtu a une partie qui est protégée contre une atmosphère oxydante ou corrosive par un revêtement et/ou une imprégnation d'un phosphate d'aluminium.

31. Appareil selon une quelconque des revendications 7 à 30, dans lequel le composant revêtu a une partie qui est protégée contre une atmosphère oxydante ou corrosive par un revêtement et/ou une imprégnation d'un composé de bore.

32. Appareil selon la revendication 12 ou une quelconques des revendications 13 à 31 quand elles dépendent de la revendication 14, dans lequel l'agitateur est agencé pour tourner autour d'un axe traversant la partie inférieure de l'agitateur.

33. Agitateur rotatif d'un appareil pour la purification d'un métal en fusion comme défini dans la revendication 12 ou une quelconque des revendications 13 à 32 quand elles dépendent de la revendication 12, l'agitateur étant muni d'un rotor et d'un arbre rotatif et comprenant une extrémité agencée pour être engagée avec des moyens d'entraînement rotatifs de l'appareil et une partie à base de carbone qui, pendant le fonctionnement, est partiellement immergée dans le métal en fusion jusqu'à une ligne de fusion, la partie à base de carbone ayant une portion d'interface s'étendant du dessous au dessus de ladite ligne de fusion, la portion d'interface formant une surface exposée à l'usure et étant revêtue d'un revêtement protecteur fritté appliqué de coulis de la matière réfractaire particulaire consolidée dans le liant inorganique stable à la chaleur comprenant au moins l'un desdits colloïdes et polymères inorganiques séchés.

34. Agitateur selon la revendication 33, dans lequel le rotor a au moins une lame d'agitation.

35. Agitateur selon la revendication 33, qui comprend un rotor à cisaillement élevé.

36. Agitateur selon la revendication 33, qui comprend un rotor à action de pompe.

37. Agitateur selon une quelconque des revendications 33 à 36, comprenant un conduit pour l'injection de fluide d'affinage.

38. Procédé de traitement d'un métal en fusion dans un appareil comme défini dans une quelconque des revendications 7 à 32, consistant temporairement ou de façon permanente à exposer la surface exposée à l'usure du composant revêtu, au métal en fusion et à imprimer un mouvement de rotation au métal en fusion autour d'un axe sensiblement vertical, le métal en fusion en contact étant en mouvement par rapport à la surface exposée à l'usure.

39. Procédé selon la revendication 38 pour purifier un métal en fusion dans un appareil comprenant un récipient pour contenir le métal en fusion et un agitateur revêtu, comme défini dans une quelconque des revendications 33 à 38, le procédé consistant à injecter un fluide d'affinage, en particulier, un gaz et/ou un flux, dans un métal en fusion contenu dans le récipient, et à faire tourner l'agitateur revêtu dans celui-ci pour agiter et disperser le fluide d'affinage injecté dans le métal en fusion pour retirer les impuretés vers la surface de celui-ci.

40. Procédé selon la revendication 39, dans lequel le métal en fusion est purifié de façon discontinue.

41. Procédé selon la revendication 40, dans lequel le métal en fusion est purifié de façon continue.

42. Procédé selon la revendication 39, 40 ou 41, consistant à injecter un gaz halogène, en particulier du chlore et/ou du fluor, comme gaz d'affinage dans le métal en fusion.

43. Procédé selon une quelconque des revendications 39 à 42, consistant à injecter un gaz inerte, en particulier de l'azote et/ou de l'argon, comme gaz d'affinage dans le métal en fusion.

44. Procédé selon une quelconque des revendications 39 à 43, consistant à injecter le gaz purifié à travers un tube qui plonge dans le métal en fusion.

45. Procédé selon une quelconque des revendications 39 à 43, consistant à injecter le gaz d'affinage dans le métal en fusion à travers un conduit dans l'agitateur.

46. Procédé selon une quelconque des revendications 39 à 45, consistant à faire tourner l'agitateur dans le métal en fusion à une vitesse de 100 à 500 tours par minute, en particulier 250 à 400 tours par minute.

47. Procédé selon une quelconque des revendications 39 à 46, pour affiner de l'aluminium en fusion.

48. Procédé selon une quelconque des revendications 39 à 46, pour affiner du magnésium en fusion.

49. Procédé selon une quelconque des revendications 39 à 46, pour affiner du fer coulé ou de l'acier en fusion.

50. Procédé selon une quelconque des revendications 39 à 46, pour affiner du cuivre en fusion.
